# EUROPÄISCHE PATENTSCHRIFT

(11) **EP 1 149 262 B1**
(45) Veröffentlichungstag und Bekanntmachung des Hinweises auf die Patenterteilung: **07.09.2005**
(21) Anmeldenummer: 00901096.8
(22) Anmeldetag: 13.01.2000
(51) Int. Cl.: F24F 3/06

(54) **KLIMAGERÄT ZUR TEMPERATURREGULIERUNG**
AIR-CONDITIONING DEVICE FOR REGULATING TEMPERATURE
DISPOSITIF DE CLIMATISATION UTILISE POUR REGULER LA TEMPERATURE

(30) Priorität: 04.02.1999 DE 19904667
(43) Veröffentlichungstag der Anmeldung: 31.10.2001
(73) Patentinhaber: STULZ GmbH, D-22457 Hamburg (DE)
(72) Erfinder: GLAGOWSKI, Heinz, D-24558 Henstedt-Ulzburg (DE)
(74) Vertreter: Schaeffer, Michael
(86) Internationale Anmeldenummer: PCT/EP2000/000188
(87) Internationale Veröffentlichungsnummer: WO 2000/046552

(56) Entgegenhaltungen:
- FR-A- 2 753 526
- GB-A- 2 245 967
- US-A- 2 715 515
- US-A- 3 305 001

## Beschreibung

Die vorliegende Erfindung betrifft ein Klimagerät zur Temperaturregulierung gemäß dem Oberbegriff des Anspruchs 1, das über einen ersten Kühlmittelkreislauf mit einem Rückkühler verbunden ist und einen von dem Rückkühler beaufschlagbaren Wärmetauscher für freie Kühlung und einen Verflüssiger aufweist. Die Erfindung betrifft weiter eine Anlage zur Temperaturregulierung.

Durch die US-A-3 305 001 ist eine gattungsgemäße zinrichtung bekannt.

Die genannten Klimageräte werden im Inneren eines Gebäudes zur Raumkühlung aufgestellt. Der Rückkühler ist im Regelfall außerhalb des Gebäudes im Freien angeordnet. Bei den bekannten Klimageräten ist in dem ersten Kühlmittelkreislauf mindestens eine Pumpe zum Umwälzen des Kühlmittels vorgesehen. Die Aufteilung zwischen dem Wärmetauscher und dem Verflüssiger des Klimagerätes erfolgt durch in Serie geschaltete Mehrwegventile. Nachteilig bei den bekannten Klimageräten ist der sehr große hydraulische Widerstand des Wärmetauschers für die freie Kühlung des Verflüssigers und der Mehrwegventile. Dies führt zu einem erhöhten Energieverbrauch für die Umwälzung des Kühlmittels in dem ersten Kühlmittelkreislauf. Weiter ist eine kostenintensive, zentrale und große Pumpe zum Überwinden des hydraulischen Widerstands erforderlich. Aus Sicherheitsgründen wird darüber hinaus eine Stand-by-Pumpe benötigt, um einen Ausfall der ersten Pumpe überbrücken zu können. Diese Stand-by-Pumpe muß dieselbe Pumpleistung wie die erste Pumpe erbringen und ist daher ebenfalls sehr kostenintensiv und groß.

Aufgabe der vorliegenden Erfindung ist es daher, ein Klimagerät bereitzustellen, das bei geringem Energieverbrauch eine gute Temperaturregulierung ermöglicht. Es ist eine weitere Aufgabe der Erfindung, eine Anlage zur Temperaturregulierung sowie ein Verfahren zum Betrieb eines Klimageräts bereitzustellen.

Erfindungsgemäß wird die Aufgabe durch den Anspruch 1 gelöst.

Durch die Parallelschaltung des Wärmetauschers und des Verflüssigers wird der wasserseitige Widerstand reduziert. Hierdurch wird der Energieverbrauch zum Umwälzen des Kühlmittels in dem ersten Kühlmittelkreislauf wesentlich verringert.

Vorteilhafte Weiterbildungen und Ausgestaltungen der Erfindung gehen aus den Unteransprüchen hervor.

Zum Umwälzen des Kühlmittels zwischen dem Rückkühler und dem Klimagerät sind mindestens zwei parallel geschaltete Pumpen mit regelbarer Drehzahl vorgesehen, wobei die ersten Pumpe den Wärmetauscher und die zweite Pumpe den Verflüssiger beaufschlagt. Die Verwendung der Pumpen anstatt der bekannten Ventile reduziert den wasserseitigen Widerstand des Klimageräts und damit den Energieverbrauch weiter. Weiter kann der Kühlmittelstrom durch den Wärmetauscher und den Verflüssiger genau eingestellt werden. In Abhängigkeit von den Randbedingungen kann die den Verflüssiger beaufschlagende Pumpe abgeschaltet werden, so daß der Energieverbrauch weiter reduziert wird.

In dem Klimagerät ist ein zweiter Kühlmittelkreislauf mit dem Verflüssiger, einem Verdampfer, einem Expansionsventil und einem Kompressor vorgesehen, der über den von dem Rückkühler beaufschlagbaren Verflüssiger gekühlt wird. Dieser zweite Kühlmittelkreislauf kann unabhängig von der Kühlung durch den Wärmetauscher des Klimagerätes mit variabler Leistung gefahren werden, so daß eine optimale Anpassung an unterschiedliche Randbedingungen ermöglicht wird.

In vorteilhafter Weiterbildung ist das Klimagerät mit einem Lüfter zur Zwangsumwälzung von Luft versehen. Hierdurch wird die Kühlleistung des Klimageräts erhöht.

Gemäß einem anderen Aspekt der vorliegenden Erfindung wird eine Anlage zur Temperaturregulierung vorgeschlagen, bei der mehrere Klimageräte der vorstehend beschriebenen Art vorgesehen sind, die zueinander parallel geschaltet und mit dem Rückkühler verbunden sind.

Insbesondere bei in den einzelnen Klimageräten angeordneten Pumpen kann auf einen separaten Pumpenschrank verzichtet werden. Die Anlage ist damit kompakter als die bekannten Anlagen. Das Anordnen der Pumpen in jedem Klimagerät ermöglicht ein flexibles Aufstellen der Klimageräte in dem Gebäude und eine autonome Regelung jedes einzelnen Klimageräts. Die Klimageräte werden lediglich an eine gemeinsame Kühlmittelvorlaufteitung und Kühlmittelrücklaufleitung des ersten Kühlmittelkreislaufs angeschlossen. Nachträgliche Erweiterungen können ohne Veränderung der Verrohrung und ohne Austausch von Pumpen erfolgen. Zusätzlich wird die umlaufende Kühlmittelmenge reduziert, da im Gegensatz zur Verwendung einer zentralen Pumpe das Kühlmittel bedarfsgerecht nur durch die in Betrieb befindlichen Klimageräte gepumpt wird.

Vorteilhaft wird die den Wärmetauscher beaufschlagende Pumpe in Abhängigkeit von der Temperatur des Kühlmittels des ersten Kühlkreislaufs und der Umgebungstemperatur des Klimageräts angesteuert. Hierdurch wird sichergestellt, daß nur dann Kühlmittel durch den Wärmetauscher gepumpt wird, wenn tatsächlich ein Beitrag zur gewünschten Temperaturregulierung geleistet wird. Sobald die Temperatur des Kühlmittels etwa der Umgebungstemperatur des Klimageräts entspricht, kann kein Beitrag zur Temperaturregulierung mehr geleistet werden. Die Pumpe zur Beaufschlagung des Wärmetauschers wird dann abgeschaltet, so daß die gesamte Temperaturregulierung durch die Pumpe zur Beaufschlagung des Verflüssigers erreicht wird.

In vorteilhafter Weiterbildung wird die den Verflüssiger beaufschlagende Pumpe in Abhängigkeit von der Kühlleistung des zweiten Kühlmittelkreislaufs in dem Klimagerät, insbesondere in Abhängigkeit von dem Verflüssigungsdruck und der elektrischen Leistungsaufnahme des Kompressors, angesteuert. Hierdurch wird sichergestellt, daß nur die zur Kühlung des zweiten Kühlmittelkreislaufs erforderliche Kühlmittelmenge umgewälzt wird, so daß der Energieverbrauch weiter verringert und die Lebensdauer nochmals gesteigert werden. Zusätzlich kann die Temperatur des Kühlmittels in dem ersten Kühlmittelkreislauf berücksichtigt werden, um ein zuverlässiges Abführen der Wärme von dem Verflüssiger zu dem Rückkühler zu gewährleisten.

Nachstehend wird die Erfindung an Hand eines Ausführungsbeispiels beschrieben, das schematisch in der Zeichnung darstellt ist. Dabei zeigt:
- Figur 1:: eine schematische Darstellung einer Anlage zur Temperaturregulierung mit mehreren parallel geschalteten erfindungsgemäßen Klimageräten; und
- Figur 2:: eine vergrößerte schematische Darstellung eines erfindungsgemäßen Klimageräts.

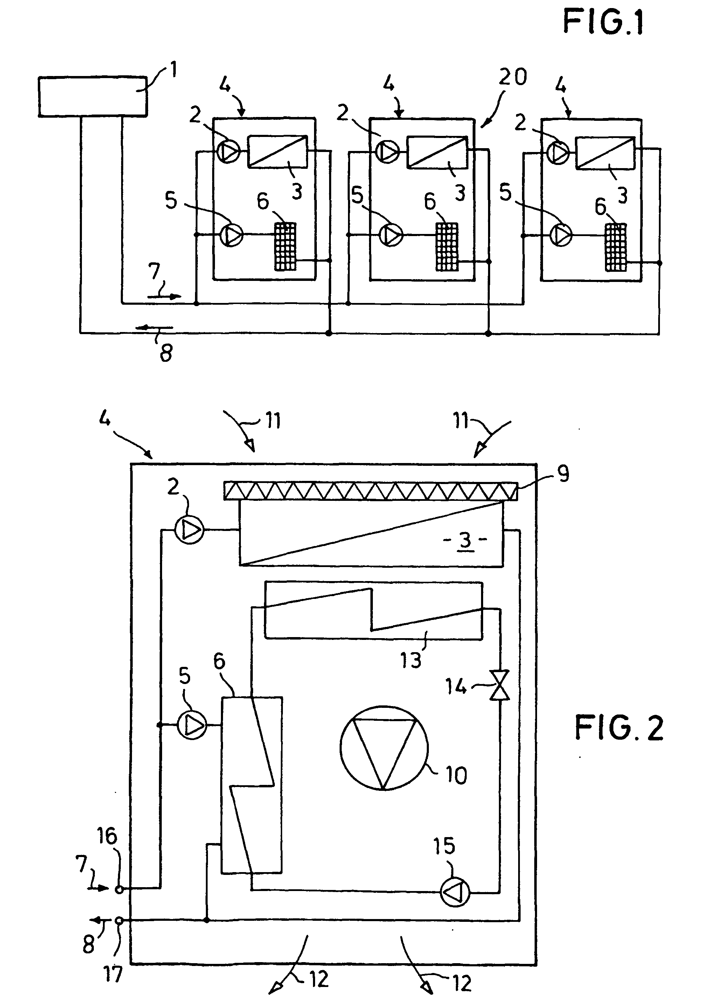

In Figur 1 ist eine Anlage 20 zur Temperaturregulierung dargestellt. Die Anlage 20 umfaßt mehrere parallel zueinander geschaltete Klimageräte 4. Die Klimageräte 4 sind über einen ersten Kühlmittelkreislauf mit einem Rückkühler 1 verbunden. Jedes Klimagerät 4 weist eine Pumpe 2 zum Beaufschlagen eines Wärmetauschers 3 für freie Kühlung sowie eine Pumpe 5 zum Beaufschlagen eines Verflüssigers 6 auf. Mittels der Pumpen 2, 5 wird gleichzeitig das Kühlmittel in dem ersten Kühlmittelkreislauf in Pfeilrichtungen 7, 8 umgewälzt. Die Pumpen 2, 5 sowie der Wärmetauscher 3 und der Verflüssiger 6 sind jeweils parallel zueinander geschaltet und weisen einen geringen hydraulischen Widerstand auf. Weiter sind die Pumpen 2, 5 getrennt voneinander in der Drehzahl regelbar. Hierdurch kann die Menge des durch den Wärmetauscher 3 und den Verflüssiger 6 gepumpten Kühlmittels getrennt vorgegeben werden.

Figur 2 zeigt eine vergrößerte schematische Darstellung eines Klimageräts 4. Die Pumpen 2, 5 sind in dem Klimagerät 4 angeordnet. In dem Klimagerät 4 ist ein zweiter Kühlmittelkreislauf vorgesehen, der den Verflüssiger 6, einen Verdampfer 13, ein Expansionsventil 14 und einen Kompressor 15 umfaßt. Zur Zwangsumwälzung der Luft ist weiter ein Lüfter 10 vorgesehen. Die Luft tritt in Pfeilrichtung 11 in das Klimagerät 4 ein, durchstömt einen Filter 9 zum Entfernen von Verunreinigungen, wird an dem Wärmetauscher 3 und dem Verdampfer 13 vorbeigeleitet, temperiert und schließlich in Pfeilrichtung 12 ausgestoßen. Das Klimagerät 4 ist über Anschlüsse 16, 17 an den ersten Kühlmittelkreislauf angeschlossen.

Die Klimageräte 4 sind im Inneren eines Gebäudes, gegebenenfalls verteilt auf mehrere Stockwerke, aufgestellt. Der Rückkühler 1 ist außerhalb des Gebäudes, also im Freien angeordnet. Es ergeben sich drei Betriebszustände, die nachstehend für ein Klimagerät 4 beschrieben werden.

Im Winterbetrieb wird das Kühlmittel des ersten Kühlmittelkreislaufs durch den Rückkühler 1 stark abgekühlt. Das kalte Kühlmittel wird mit der Pumpe 2 durch den Wärmetauscher 3 für die freie Kühlung gepumpt. Wegen der niedrigen Temperatur des Kühlmittels kann die erforderliche Kälteleistung allein durch den Wärmetauscher 3 erbracht werden. Bei einem Anstieg der Raumtemperatur wird über einen geeigneten Regler die Drehzahl der Pumpe 2 erhöht und so die Kühlmittelmenge bedarfsgerecht geregelt.

Im Sommerbetrieb liegt die Temperatur des Kühlmittels auch nach dem Abkühlen im Rückkühler 1 noch oberhalb der Raumtemperatur. Die Pumpe 2 ist daher abgeschaltet, da die gewünschte Temperaturregulierung durch freie Kühlung nicht erreicht werden kann. Das Kühlmittel wird daher über die Pumpe 5 direkt zu dem Verflüssiger 6 gepumpt.

Zur Abkühlung dient der zweite Kühlmittelkreislauf in dem Klimageräte 4, der in Figur 2 näher dargestellt ist. Dieser zweite Kühlmittelkreislauf ermöglicht eine Abkühlung der Umgebung des Klimageräts 4 durch Umwälzen eines weiteren Kühlmittels. Die der Umgebung des Klimageräts 4 entzogene Wärme wird in dem Verflüssiger 6 an den ersten Kühlmittelkreislauf und von dort über den Rückkühler 1 außerhalb des Gebäudes abgeführt. Die Pumpe 5 wird in Abhängigkeit von der Kühlleistung des zweiten Kühlmittelkreislaufs angesteuert. Diese Kühlleistung hängt von der von dem Kompressor 15 erzeugten Verdichtung ab, die sich über die elektrische Leistungsaufnahme oder dem Verflüssigungsdruck/Saugdruck des Kompressor 1 5 ermitteln läßt. Die Drehzahl der Pumpe 5 wird deshalb in Abhängigkeit von der Temperatur des Kühlmittels oder dem Verflüssigungsdruck in dem zweiten Kühlmittelkreislauf eingestellt. Hierdurch ist eine zuverlässige Wärmeabfuhr von dem Verflüssiger 6 zu dem Rückkühler 1 gewährleistet.

In der Übergangszeit ist die Kühlleistung des Wärmetauschers 3 für freie Kühlung bei steigender Außentemperatur für die gewünschte Temperaturregulierung nicht ausreichend. Es wird daher der zweite Kühlmittelkreislauf des Klimageräts 4 zugeschaltet. Die Pumpen 2, 5 laufen während dieser Übergangszeit bedarfsgerecht. Die Pumpe 2 läuft hierbei mit Maximalleistung, um möglichst viel Kühlleistung zu erzeugen. Die verbleibende Kühlleistung wird über die Pumpe 5 und den zweiten Kühlmittelkreislauf in dem Klimagerät 4 erzeugt. Die Pumpe 5 und der Kompressor 1 5 laufen hierbei mit vergleichsweise geringer Leistung und geringem Energieverbrauch.

Die Drehzahl der Pumpen 2, 5 und die dem Wärmetauscher 3 und dem Verflüssiger 6 zugeführte Kühlmittelmenge wird in Abhängigkeit von der benötigten Kühlleistung für jedes Klimagerät 4 individuell und autonom eingestellt.

Als Kühlmittel im ersten Kühlmittelkreislauf wird bevorzugt eine Mischung von Wasser und Frostschutzmittel eingesetzt, während im zweiten Kühlmittelkreislauf ein Kältemittel, beispielsweise R 22, verwendet wird.

Die erfindungsgemäßen Klimageräte 4 ermöglichen durch die Parallelschaltung des Wärmetauschers 3 und des Verflüssigers 6 eine erhebliche Verringerung des hydraulischen Widerstands. Hierdurch kann der zum Umwälzen des Kühlmittels in dem ersten Kühlmittelkreislauf erforderliche Energieverbrauch deutlich gesenkt werden. Eine weitere Absenkung läßt sich durch den Einsatz von parallel geschalteten Pumpen 2, 5 erreichen, deren Drehzahlen getrennt voneinander einstellbar sind.

## Patentansprüche

1. Klimagerät (4) zu Temperaturregulierung, wobei das Klimagerät einen ersten Kühlmittelkreislauf aufweist, über den das Klimagerät mit einem Rückkühler (1) verbunden ist, und einen von dem Rückkühler (1) beaufschlagbaren Wärmetauscher (3) für freie Kühlung, und einen von dem Rückkühler (1) beaufschlagbaren Verflüssiger (6) aufweist, der mit einem zweiten Kühlkreislauf verbunden ist, der einen Verdampfer (13), ein Expansionsventil (14) und einen Kompressor (15) aufweist, wobei der zweite Kühlmittelkreislauf über den von dem Rückkühler (1) beaufschlagbaren Verflüssiger (6) gekühlt wird, wobei der Wärmetauscher (3) und der Verflüssiger (6) parallel geschaltet sind, **dadurch gekennzeichnet, dass** mindestens zwei parallel geschaltete Pumpen (2, 5) mit regelbarer Drehzahl zum Umwälzen des Kühlmittels zwischen dem Rückkühler (1), dem Wärmetauscher (3) und dem Verflüssiger (6) vorgesehen sind, wobei die erste Pumpe (2) den Wärmetauscher (3) und die zweite Pumpe (5) den Verflüssiger (6) beaufschlagt, und dass die Pumpen (2, 5) unabhängig voneinander betrieben werden können.

2. Klimagerät nach Anspruch 1, **dadurch gekennzeichnet, dass** das Klimagerät (4) mit einem Lüfter (10) zur Zwangsumwälzung von Luft versehen ist.

3. Klimagerät nach einem der Ansprüche 1 oder 2, **dadurch gekennzeichnet, dass** die den Wärmetauscher (3) beaufschlagende Pumpe (2) in Abhängigkeit von der Temperatur des Kühlmittels des ersten Kühlmittelkreislaufs und der Umgebungstemperatur des Klimageräts (4) angesteuert wird.

4. Klimagerät nach einem der Ansprüche 1 bis 3, **dadurch gekennzeichnet, dass** die den Verflüssiger (6) beaufschlagende Pumpe (5) in Abhängigkeit von der Kühlleistung des zweiten Kühlmittelkreislaufs in dem Klimagerät (4), insbesondere in Abhängigkeit von dem Verflüssigungsdruck und der elektrischen Leistungsaufnahme des Kompressors (15) angesteuert wird.

5. Anlage zur Temperaturregulierung, **dadurch gekennzeichnet, dass** mehrere Klimageräte (4) zu Temperaturregulierung vorgesehen sind, die zueinander parallel geschaltet und mit einem Rückkühler (1) verbunden sind, wobei jedes Klimagerät einen ersten Kühlmittelkreislauf aufweist, über den das Klimagerät mit dem Rückkühler (1) verbunden ist, und einen von dem Rückkühler (1) beaufschlagbaren Wärmetauscher (3) für freie Kühlung, und einen von dem Rückkühler (1) beaufschlagbaren Verflüssiger (6) aufweist, der mit einem zweiten Kühlkreislauf verbunden ist, der einen Verdampfer (13), ein Expansionsventil (14) und einen Kompressor (15) aufweist, wobei der zweite Kühlmittelkreislauf über den von dem Rückkühler (1) beaufschlagbaren Verflüssiger (6) gekühlt wird, wobei der Wärmetauscher (3) und der Verflüssiger (6) parallel geschaltet sind, wobei in jedem Klimagerät (4) mindestens zwei parallel geschaltete Pumpen (2, 5) zum Umwälzen des Kühlmittels zwischen dem Rückkühler (1), dem Wärmetauscher (3) und dem Verflüssiger (6) vorgesehen sind, wobei die erste Pumpe (2) den Wärmetauscher (3) und die zweite Pumpe (5) den Verflüssiger (6) beaufschlagt, und wobei die Pumpen (2, 5) unabhängig voneinander betrieben werden können.

## Claims

1. An air conditioner (4) for temperature regulation, wherein the air conditioner has a first coolant circuit, via which the air conditioner is connected to a recooler (1), and a heat exchanger (3) which is for free cooling and which can be acted upon by the recooler (1), and a condenser (6) which can be acted upon by the recooler (1), which condenser (6) is connected to a second coolant circuit which has an evaporator (13), an expansion valve (14) and a compressor (15), wherein the second coolant circuit is cooled via the condenser (6) which can be acted upon by the recooler (1), wherein the heat exchanger (3) and the condenser (6) are connected in parallel, **characterised in that** at least two pumps (2, 5) which are connected in parallel and which have an adjustable speed are provided in order to circulate the coolant between the recooler (1), the heat exchanger (3) and the condenser (6), wherein the first pump (2) acts upon the heat exchanger (3) and the second pump (5) acts upon the condenser (6), and **in that** the pumps (2, 5) can be operated independently of one another.

2. An air conditioner according to claim 1, **characterised in that** the air conditioner (4) is provided with a fan (10) to force air to circulate.

3. An air conditioner according to one of claims 1 and 2, **characterised in that** the pump (2) acting upon the heat exchanger (3) is actuated in dependence on the temperature of the coolant of the first coolant circuit and the ambient temperature of the air conditioner (4).

4. An air conditioner according to any one of claims 1 to 3, **characterised in that** the pump (5) acting upon the condenser (6) is actuated in dependence on the cooling capacity of the second coolant circuit in the air conditioner (4), in particular in dependence on the condensing pressure and the electrical power consumption of the compressor (15).

5. An installation for temperature regulation, **characterised in that** a plurality of air conditioners (4) for temperature regulation are provided, which are connected in parallel with one another and which are connected to a recooler (1), wherein each air conditioner has a first coolant circuit, via which the air conditioner is connected to the recooler (1), and a heat exchanger (3) which is for free cooling and which can be acted upon by the recooler (1), and a condenser (6) which can be acted upon by the recooler (1), which condenser (6) is connected to a second coolant circuit which has an evaporator (13), an expansion valve (14) and a compressor (15), wherein the second coolant circuit is cooled via the condenser (6) which can be acted upon by the recooler (1), wherein the heat exchanger (3) and the condenser (6) are connected in parallel, wherein at least two pumps (2, 5) connected in parallel are provided in each air conditioner (4) in order to circulate the coolant between the recooler (1), the heat exchanger (3) and the condenser (6), wherein the first pump (2) acts upon the heat exchanger (3) and the second pump (5) acts upon the condenser (6), and wherein the pumps (2, 5) can be operated independently of one another.

## Revendications

1. Dispositif de climatisation (4) pour réguler la température, le dispositif de climatisation comprenant un premier circuit de fluide réfrigérant, via lequel le dispositif de climatisation est relié à un refroidisseur de retour (1), et un échangeur de chaleur (3) de refroidissement libre, alimenté par le refroidisseur de retour (1), et un condenseur (6) qui est alimenté par le refroidisseur de retour (1) et est relié à un deuxième circuit de fluide réfrigérant, lequel comprend un évaporateur (13), un robinet détendeur (14) et un compresseur (15), le deuxième circuit de fluide réfrigérant étant refroidi par le condenseur (6) alimenté par le refroidisseur de retour (1), l'échangeur de chaleur (3) et le condenseur (6) étant branchés en parallèle, **caractérisé par le fait qu'**il est prévu au moins deux pompes (2, 5) à vitesse réglable, branchées en parallèle, pour faire circuler le fluide réfrigérant entre le refroidisseur de retour (1), l'échangeur de chaleur (3) et le condenseur (6), la première pompe (2) alimentant l'échangeur de chaleur (3) et la deuxième pompe (5) alimentant le condenseur (6), et **par le fait que** les pompes (2, 5) peuvent fonctionner indépendamment l'une de l'autre.

2. Dispositif de climatisation selon la revendication 1, **caractérisé par le fait que** le dispositif de climatisation (4) est pourvu d'un ventilateur (10) pour la circulation forcée de l'air.

3. Dispositif de climatisation selon une des revendications 1 ou 2, **caractérisé par le fait que** la pompe (2) alimentant l'échangeur de chaleur (3) est pilotée en fonction de la température du fluide réfrigérant du premier circuit de fluide réfrigérant et de la température ambiante du dispositif de climatisation (4).

4. Dispositif de climatisation selon une des revendications 1 à 3, **caractérisé par le fait que** la pompe (5) alimentant le condenseur (6) est pilotée en fonction de la puissance frigorifique du deuxième circuit de fluide réfrigérant dans le dispositif de climatisation (4), notamment en fonction de la pression de condensation et de la puissance électrique absorbée du compresseur (15).

5. Installation de régulation de température, **caractérisée par le fait qu'**il est prévu plusieurs dispositifs de climatisation (4) pour réguler la température, qui sont branchés en parallèle les uns avec les autres et sont reliés à un refroidisseur de retour (1), chaque dispositif de climatisation comprenant un premier circuit de fluide réfrigérant, via lequel le dispositif de climatisation est relié à un refroidisseur de retour (1), et un échangeur de chaleur (3) de refroidissement libre, alimenté par le refroidisseur de retour (1), et un condenseur (6) qui est alimenté par le refroidisseur de retour (1) et est relié à un deuxième circuit de fluide réfrigérant, lequel comprend un évaporateur (13), un robinet détendeur (14) et un compresseur (15), le deuxième circuit de fluide réfrigérant étant refroidi par le condenseur (6) alimenté par le refroidisseur de retour (1), l'échangeur de chaleur (3) et le condenseur (6) étant branchés en parallèle, au moins deux pompes (2, 5) branchées en parallèle étant prévues pour faire circuler le fluide réfrigérant entre le refroidisseur de retour (1), l'échangeur de chaleur (3) et le condenseur (6), la première pompe (2) alimentant l'échangeur de chaleur (3) et la deuxième pompe (5) alimentant le condenseur (6), et les pompes (2, 5) pouvant fonctionner indépendamment l'une de l'autre.
